# EUROPÄISCHE PATENTANMELDUNG

(11) **EP 1 102 150 A2**
(43) Veröffentlichungstag der Anmeldung: **23.05.2001**
(21) Anmeldenummer: 00124258.5
(22) Anmeldetag: 13.11.2000
(51) Int. Cl.: G06F 1/00

(54) **Identifikationsverfahren für Internetanwender**

(30) Priorität: 15.11.1999 CH 208099
(71) Anmelder: Orell Füssli Security Documents AG, 8003 Zürich (CH); IniNet AG, 4153 Reinach (CH)
(72) Erfinder: Schweingruber, Jürg, CH-8604 Volketswil (CH); Brunner, Daniel, CH-8143 Stallikon (CH); Baumgartner, Matthias, CH-4105 Biel-Benken (CH); Brügger, Peter, CH-4132 Muttenz (CH)
(74) Vertreter: Blum, Rudolf Emil Ernst

(57) **Zusammenfassung**

Es wird ein Identifikationsverfahren für Internetteilnehmer (1) offenbart, mit dem eine hohe Sicherheit der Benutzererkennung auch ohne aufwendige Verschlüsselungsalgorithmen erreicht wird. Erfindungsgemäss werden vom Internetteilnehmer (1) eine Nachricht (2') und Daten, aus denen eine Telefonnummer des Internetteilnehmers (1) ableitbar ist, über Internet (2) einem Empfänger (3) gesandt und über das Telefonnetz (4) eine Benutzeridentifikation durchgeführt. Diese umfasst eine telefonische Kontrollmeldung (7; 7a-7c) an den Internetteilnehmer (1), eine Überprüfung von dessen Identität am Telefonanschluss (5) und eine telefonische Verifikationsmeldung (8; 8a-8c) an den Empfänger (3). Vorteilhafte Ausführungsformen betreffen: eine automatische Steuerung der Benutzeridentifikation durch eine Chipkarte (5a) am Telefonanschluss (5), Steckbarkeit einer solchen Chipkarte (5a) in einen Mobiltelefonanschluss (5), Chipkarte (5a) mit digitaler Verschlüsselungs- und/oder Chiffriermöglichkeit und eine Multiapplikations-Chipkarte (5a) mit Zusatzfunktionen als Telefonkarte, Kreditkarte, Kundenkarte oder elektronische Geldbörse. Die telefonische Kontrollmeldung (7; 7a-7c) und telefonische Verifikationsmeldung (8; 8a-8c) können als kostengünstige Kurztextmitteilungen ("short message services", "SMS") versandt werden.

## Beschreibung

### TECHNISCHES GEBIET

Die Erfindung betrifft ein Verfahren zur Identifikation von Internetanwendern nach dem Oberbegriff der unabhängigen Ansprüche.

### STAND DER TECHNIK

Für die Zukunft des elektronischen Handels über Internet ist die Sicherheit der Anwendererkennung von entscheidender Bedeutung. Typischerweise wird zur Verifizierung von Internetteilnehmern eine Liste persönlicher Identifikationsnummern (PIN-Liste) und gegebenenfalls eine Streichliste verwendet. Dabei ist nur eine eingeschränkte Sicherheit der Absendererkennung erreichbar. Bekannt ist auch die digitale Unterschrift, bei welcher ein Teilnehmer seine Nachricht mit seinem geheimen privaten Schlüssel unterschreibt und die Unterschrift anhand seines öffentlichen Schlüssels, der mit dem privaten Schlüssel mathematisch verknüpft ist, überprüft wird. Die Nachricht kann auch anhand der Schlüssel chiffriert und dechiffriert werden. Solche Verschlüsselungsalgorithmen erfordern einen grossen mathematischen Entwicklungsaufwand und ständige Weiterentwicklung, um mit der verbesserten Dechiffriertechnik und der zunehmenden Rechenleistung Schritt halten zu können.

### DARSTELLUNG DER ERFINDUNG

Die Erfindung stellt sich die Aufgabe, ein einfaches, weitgehend fehlerfreies und fälschungssicheres Verfahren zur Identifikation von Internetteilnehmern anzugeben.

Diese Aufgabe wird erfindungsgemäss durch die Merkmale der unabhängigen Ansprüche gelöst.

Erfindungsgemäss werden vom Internetteilnehmer eine Nachricht und Daten, aus denen eine Telefonnummer des Internetteilnehmers ableitbar ist, über Internet an einen Empfänger versandt, über ein Telefonnetz eine Kontrollmeldung an die Telefonnumer übermittelt, am zugehörigen Telefonanschluss die Identität des Internetteilnehmers geprüft und eine Verifikationsmeldung zur Bestätigung der Kontrollmeldung zuhanden des Empfängers über das Telefonnetz rückübermittelt. Durch den kombinierten Einsatz von Internet und Telefonnetz kann die geforderte Sicherheit der Benutzeridentifikation ohne komplizierte Verschlüsselung erreicht werden. Gleichwohl sind Verschlüsselungsalgorithmen bei Bedarf problemlos auf das Verfahren anwendbar. Der Internetanbieter erhält durch die Benutzeridentifikation eine gesicherte Bestellbestätigung und damit eine rechtliche Grundlage für seine Geldforderung. Der Telefonnetzbetreiber kann durch seinen Identifikationsservice und gegebenenfalls weitere Dienstleistungen die Kundenbindung erhöhen. Der Internetteilnehmer kann seine Bestellung oder seinen Auftrag verifizieren, ohne seine Kreditkartennummer im Internet zugänglich zu machen. Er kann auch sicher sein, dass Unberechtigte keine Bestellungen in seinem Namen aufgeben.

In einem Ausführungsbeispiel wird die Benutzeridentifikation durchgeführt, um den Telefonanschluss freizuschalten und/oder die Verifikationsmeldung zu bestätigen, d. h. beispielsweise automatisch zu generieren oder für den Versand freizugeben. Die Verifikationsmeldung wird also durch die Personalisierung des Telefonanschlusses und/oder eine benutzerspezifische Kodenummer o. ä. gegebenenfalls doppelt geschützt. Insbesondere wird der Benutzer durch einen PIN-Kode, eine Streichliste und/oder biometrische Merkmale am Telefonanschluss identifiziert.

In einem wichtigen Ausführungsbeispiel wird die Benutzeridentifikation von einer Chipkarte am Telefonanschluss gesteuert. Dadurch ist eine weitgehende Automatisierung der Identitätsprüfung ohne Verlust an Sicherheit auf einfache Weise realisierbar.

In einem weiteren Ausführungsbeispiel ist die Chipkarte zum Datenaustausch mit einem beliebigen Telefonanschluss verbindbar und vorzugsweise in ein Mobiltelefon ("Handy", "Natel") einsteckbar oder einlegbar. Die auf der Chipkarte gespeicherten persönlichen Daten und gegebenenfalls die Telefonnummer sind dann geräteunabhängig und die Flexibilität des Benutzers wird erhöht.

In einem anderen Ausführungsbeispiel werden die über das Telefonnetz übermittelten Daten auf der Chipkarte durch eine digitale Unterschrift und/oder Chiffrierung geschützt. Dadurch wird die Sicherheit des Identifikationsverfahrens nochmals verbessert.

Weitere Ausführungsbeispiele betreffen eine Multiapplikations-Chipkarte, auf der zusätzliche Funktionen als Telefonkarte, Kreditkarte, Kundenkarte, elektronische Geldbörse o. ä. gespeichert sind.

In einem bevorzugten Ausführungsbeispiel wird die telefonische Kontrollmeldung und/oder Verifikationsmeldung als Kurztextmitteilung ("short message services", "SMS") zum Mobiltelefonanschluss des Internetteilnehmers gesandt, was besonders kostengünstig ist.

Weitere Ausführungen, Vorteile und Anwendungen der Erfindung ergeben sich aus den abhängigen Ansprüchen sowie aus der nun folgenden Beschreibung anhand der Figuren.

### KÜRZE BESCHREIBUNG DER ZEICHNUNGEN

- Fig. 1: zeigt ein erstes schematisches Ablaufdiagramm zur erfindungsgemässen Identifikation eines Internetteilnehmers;
- Fig. 2: zeigt ein zweites schematisches Ablaufdiagramm zur erfindungsgemässen Identifikation eines Internetteilnehmers;

In den Figuren sind gleiche Teile mit gleichen Bezugszeichen versehen.

### WEGE ZUR AUSFÜHRUNG DER ERFINDUNG

Im Kontext dieser Erfindung bezeichnet Internet das bekannte weltweite Computernetzwerk zum Austausch digitaler Daten über TCP/IP- oder verwandte Protokolle und dessen Weiterentwicklungen.

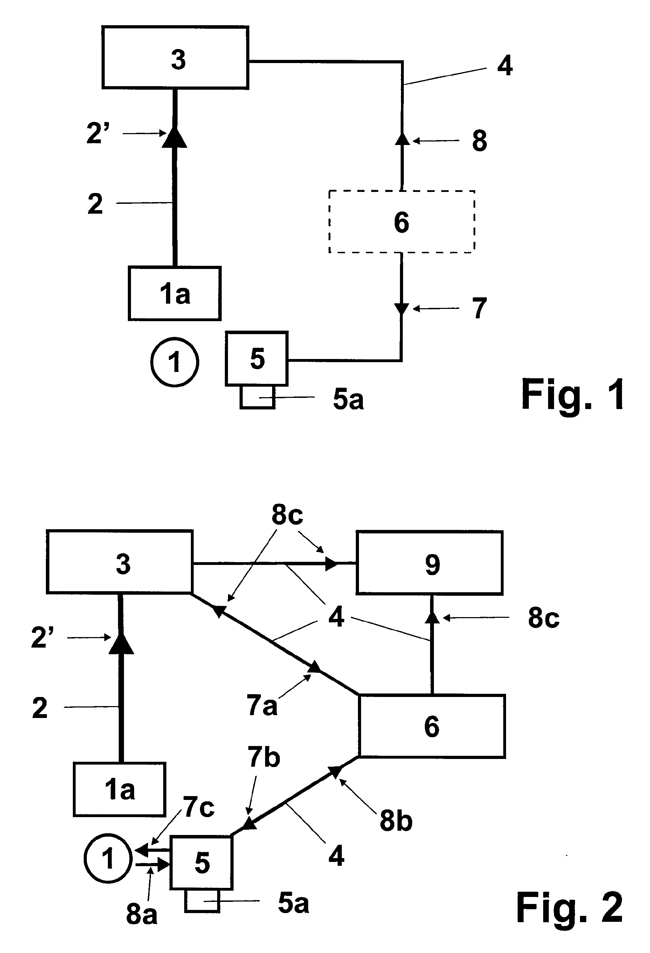

Nach Fig. 1 wird von einem Internetteilnehmer 1 eine Nachricht 2', zusammen mit Daten, aus denen eine Telefonnummer des Internetteilnehmers 1 ableitbar ist, über Internet 2 an einen Empfänger 3 versandt. Zur Prüfung der Identität des Internetteilnehmers 1 und gegebenenfalls des Inhalts seiner Internet-Nachricht 2' werden wenigstens drei Schritte ausgeführt: auf Veranlassung des Empfängers 3 wird eine Kontrollmeldung 7 über ein Telefonnetz 4 an die Telefonnummer übermittelt, am zugehörigen Telefonanschluss 5 wird eine Benutzeridentifikation des Internetteilnehmers 1 durchgeführt, und schliesslich wird eine Verifikationsmeldung 8 für den Empfänger 3 zur Bestätigung der Kontrollmeldung 7 über das Telefonnetz 4 rückübermittelt. Unabhängig von dem erfindungsgemässen Verfahren kann die Identifikation des Teilnehmers für den Zugang zum Internet 2 auf beliebige Weise realisiert sein. Im folgenden werden einige Ausführungsbeispiele der Erfindung angegeben.

Für die Benutzeridentifikation des Internetteilnehmers 1 am Telefonanschluss 5 stehen beispielsweise eine PIN-Liste, eine Streichliste und/oder biometrische Verfahren zur Verfügung. Insbesondere wird der Internetteilnehmer 1 anhand seines Fingerabdrucks, seiner Unterschrift und/ oder seiner Sprache identifiziert. Bei dem Verfahren kann von den gegenwärtigen und zukünftigen Bemühungen der Telefonnetzbetreiber zur Identifikation Ihrer Kunden profitiert werden.

Die Benutzeridentifikation des Internetteilnehmers 1 soll von einer Chipkarte 5a im Telefonanschluss 5 gesteuert werden. Der Telefonanschluss 5 kann ein Festanschluss 5 oder ein Mobiltelefonanschluss 5, insbesondere in einem GSM- oder UMTS-Mobiltelefonnetz 4, sein. Mit Vorteil ist die Chipkarte 5a ein modulares Element, das mit dem Telefonanschluss 5 reversibel verbunden werden kann. Die Art und Normierung der Schnittstelle zwischen Chipkarte 5a und Telefonanschluss 5 spielen dabei keine Rolle. Bevorzugt wird die Chipkarte 5a in ein Mobiltelefon 5 eingesteckt oder eingelegt. Die Telefonnummer des Internetteilnehmers 1 kann unmittelbar auf der Chipkarte 5a kodiert sein. Die Chipkarte 5a dient zur Verarbeitung und Prüfung von Identitätsmerkmalen des Internetteilnehmers 1 und darüberhinaus gegebenenfalls als elektronischer Ausweis für das Telefonnetz 4. Somit ist ein beliebiger Telefonanschluss 5 durch die Chipkarte 5a als aktueller Telefonanschluss 5 des Internetteilnehmers 1 charakterisiert.

In einem wichtigen Ausführungsbeispiel wird die Chipkarte 5a zur digitalen Verschlüsselung und/oder Chiffrierung verwendet. Einerseits können die über das Telefonnetz 4 zu versendenden Daten in der Chipkarte 5a mit einer digitalen Unterschrift versehen und/oder chiffriert werden. Andererseits können über das Telefonnetz 4 empfangene Daten anhand einer digitalen Unterschrift identifiziert und/oder dechiffriert werden. Die Sicherheit der telefonischen Übermittlung der Verifikationsmeldung 8; 8a-8c und/oder Kontrollmeldung 7; 7a-7c wird dadurch zusätzlich verbessert.

Mit Vorteil ist die Chipkarte 5a eine Multiapplikations-Chipkarte 5a, insbesondere eine Java-Karte, Smart-Karte für Windows oder Multos-Karte. Sie kann, muss aber nicht die Funktionen einer herkömmlichen SIM-Karte für Natels 5 umfassen. Die Multiapplikationskarte 5a ist für zusätzliche Anwendungen z. B. als Telefonkarte, Kreditkarte, Kundenkarte, elektronische Geldbörse o. ä. programmiert.

Gemäss einem weiteren Ausführungsbeispiel wird die Kontrollmeldung 7 automatisch oder zumindest teilautomatisch generiert und übermittelt. Aus Kostengründen kann die Kontrollmeldung 7; 7a-7c und/oder die Verifikationsmeldung 8; 8a-8c eine Kurztextmitteilung ("SMS") sein. Auch eine Sprachmitteilung ist möglich. Diese und weitere Mitteilungsformen können auch kombiniert verwendet werden.

Der Charakter der Erfindung ändert sich nicht, wenn der Mobiltelefonanschluss 5 in dem Internetterminal la integriert ist. Sofern nur eine Telefonleitung für den Zugang zum Internet 2 und zum regulären Telefonnetz 4 vorhanden ist, kann der Zugang zu beiden Netzen 2, 4 z. B. im Zeitmultiplexverfahren betrieben werden.

Gemäss Fig. 1 kann zusätzlich eine Benutzeridentifikation von einem Betreiber 6 des Telefonnetzes 4 überprüft und/oder ergänzt werden (gestrichelte Darstellung). Beispielsweise vergleicht der Betreiber 6 ihm zugängliche Daten des Internetteilnehmers 1 mit aus der Nachricht 2' des Internetteilnehmers 1 ableitbaren Daten, z. B. mit dessen Telefonnummer, und/oder mit Daten von dessen Chipkarte 5a am Telefonanschluss 5 auf Übereinstimmung. Hierbei kann von der Kundenkenntnis des Telefonnetzbetreibers 6 profitiert werden, um zusätzliche Sicherheit der Benutzeridentifikation zu schaffen.

In Fig. 2 ist der Empfänger 3 der Internetnachricht 2' z. B. ein Betreiber 3 einer Internetseite, welcher die Nachricht 2' an den adressierten Händler 9 weiterleitet. Der Empfänger 3 sendet die Kontrollmeldung 7a, 7b, 7c über den Telefonnetzbetreiber 6 auf das Mobiltelefon 5 des Internetteilnehmers 1, wo sie registriert, gelesen oder gehört wird. Die Verifikationsmeldung 8a, 8b, 8c wird vom Mobiltelefon 5 und/oder vom Internetteilnehmer 1 generiert, autorisiert und zurückgeschickt, gegebenenfalls beim Telefonnetzbetreiber 6 zwischengeprüft, beim Empfänger 3 endgeprüft und dem Händler 9 z. B. via Telefonnetz 4 weitergeleitet. Der Telefonnetzbetreiber 6 kann auch die Verifikationsmeldung 8c direkt dem Händler 9 übermitteln. Darüberhinaus kann von einem Dritten, z. B. dem Telefonnetzbetreiber 6, eine Bonität des Internetteilnehmers 1 geprüft und dem Empfänger 3 oder Händler 9 mitgeteilt werden. Der Empfänger 3 kann auch selber ein Anbieter 9 von Dienstleistungen oder Waren sein.

Gegenstand der Erfindung sind ferner Anwendungen des obigen Identifikationsverfahrens. Mit der Nachricht 2' des Internetteilnehmers 1 lassen sich über das Internet 2 eine Ware bestellen, eine Dienstleistung in Auftrag geben und/oder eine gewünschte Zahlungsart bestimmen. Durch die Verifikationsmeldung 8; 8a-8c über das Telefonnetz 4 kann zusätzlich zur Benutzeridentifizierung eine Bestätigung der Bestellung, des Auftrags und/oder der Zahlungsart übermittelt werden. Dabei kann eine konventionelle Zahlung per Rechnung, Cheque, Kreditkarte, persönlicher Kundenkarte oder per direkter Abbuchung auf eine Telefon- oder Mobiltelefonrechnung bestimmt werden. Bevorzugt wird eine elektronische Zahlung über das Telefonnetz 4 autorisiert oder ausgeführt, z. B. durch Abbuchung von einer elektronischen Geldbörse auf der Chipkarte 5a.

## Patentansprüche

1. Verfahren zur Identifikation eines Internetteilnehmers (1), wobei vom Internetteilnehmer (1) eine Nachricht (2') zusammen mit Daten, aus denen eine Telefonnummer des Internetteilnehmers (1) abgeleitet werden kann, über Internet (2) an einen Empfänger (3) versandt wird, dadurch gekennzeichnet, dass
a) auf Veranlassung des Empfängers (3) eine Kontrollmeldung (7; 7a-7c) über ein Telefonnetz (4) an die Telefonnummer übermittelt wird,
b) am zugehörigen Telefonanschluss (5) eine Benutzeridentifikation des Internetteilnehmers (1) durchgeführt wird und
c) eine Verifikationsmeldung (8; 8a-8c) für den Empfänger (3) zur Bestätigung der Kontrollmeldung (7; 7a-7c) über das Telefonnetz (4) rückübermittelt wird.

2. Verfahren nach Anspruch 1, dadurch gekennzeichnet, dass
a) die Benutzeridentifikation des Internetteilnehmers (1) zur Freischaltung des Telefonanschlusses (5) durchgeführt wird und/oder
b) die Benutzeridentifikation des Internetteilnehmers (1) zur Bestätigung der Verifikationsmeldung (8; 8a-8c) durchgeführt wird.

3. Verfahren nach einem der Ansprüche 1-2, dadurch gekennzeichnet, dass
a) die Benutzeridentifikation mit Hilfe eines PIN-Kodes und/oder einer Streichliste und/oder biometrischer Merkmale durchgeführt wird und
b) insbesondere dass zur Benutzeridentifikation ein Fingerabdruck, eine Unterschrift und/oder eine Spracherkennung des Internetteilnehmers (1) verwendet werden.

4. Verfahren nach einem der Ansprüche 1-3, dadurch gekennzeichnet, dass
a) die Benutzeridentifikation von einer Chipkarte (5a) gesteuert wird und
b) insbesondere dass auf der Chipkarte (5a) die Telefonnummer des Internetteilnehmers (1) kodiert ist.

5. Verfahren nach Anspruch 4, dadurch gekennzeichnet, dass
a) die Chipkarte (5a) für einen Datenaustausch reversibel mit dem Telefonanschluss (5) verbunden wird und/oder
b) der Telefonanschluss (5) ein Mobiltelefonanschluss (5) insbesondere in einem GSM- oder UMTS-Mobiltelefonnetz (4) ist.

6. Verfahren nach einem der Ansprüche 4-5, dadurch gekennzeichnet, dass
a) über das Telefonnetz (4) zu versendende Daten in der Chipkarte (5a) mit einer digitalen Unterschrift versehen und/oder chiffriert werden und/oder
b) über das Telefonnetz (4) zu empfangende Daten in der Chipkarte (5a) anhand einer digitalen Unterschrift identifiziert und/oder dechiffriert werden.

7. Verfahren nach einem der Ansprüche 4-6, dadurch gekennzeichnet, dass
a) die Chipkarte (5a) eine Multiapplikations-Chipkarte (5a), insbesondere eine Java-Karte, Smart-Karte für Windows oder Multos-Karte, ist und
b) insbesondere dass die Multiapplikations-Chipkarte (5a) für zusätzliche Anwendungen als Telefonkarte, Kreditkarte, Kundenkarte und/oder elektronische Geldbörse programmiert ist.

8. Verfahren nach einem der Ansprüche 1-7, dadurch gekennzeichnet, dass die Kontrollmeldung (7; 7a-7c) automatisch generiert und übermittelt wird.

9. Verfahren nach einem der Ansprüche 1-8, dadurch gekennzeichnet, dass
a) die Kontrollmeldung (7; 7a-7c) und/oder die Verifikationsmeldung (8; 8a-8c) eine Kurztextmitteilung ("SMS") umfasst und/oder
b) die Kontrollmeldung (7; 7a-7c) und/oder die Verifikationsmeldung (8; 8a-8c) eine Sprachmitteilung umfasst.

10. Verfahren nach einem der Ansprüche 1-9, dadurch gekennzeichnet, dass
a) die Benutzeridentifikation des Internetteilnehmers (1) von einem Betreiber (6) des Telefonnetzes (4) überprüft und/oder ergänzt wird und
b) insbesondere dass dem Betreiber (6) zugängliche Daten des Internetteilnehmers (1) mit aus der Nachricht (2') des Internetteilnehmers (1) ableitbaren Daten und/oder mit Daten von dessen Chipkarte (5a) am Telefonanschluss (5) auf Übereinstimmung verglichen werden.

11. Anwendung des Verfahrens zur Identifikation eines Internetteilnehmers (1) nach einem der Ansprüche 1-10, dadurch gekennzeichnet, dass
a) mit der Nachricht (2') des Internetteilnehmers (1) über das Internet (2) eine Ware bestellt, eine Dienstleistung in Auftrag gegeben und/oder eine gewünschte Zahlungsart bestimmt wird oder werden und/oder
b) mit der Verifikationsmeldung (8; 8a-8c) über das Telefonnetz (4) eine Bestätigung einer Bestellung, eines Auftrags und/oder einer Zahlungsart übermittelt wird und/oder
c) mit der Verifikationsmeldung (8; 8a-8c) über das Telefonnetz (4) eine direkte Abbuchung auf eine Telefonrechnung oder eine elektronische Zahlung autorisiert oder ausgeführt wird.

12. Anwendung des Verfahrens zur Identifikation nach Anspruch 11, dadurch gekennzeichnet, dass
a) der Empfänger (3) ein Betreiber einer Internetseite oder ein Anbieter (9) von Dienstleistungen oder Waren ist und/oder
b) von einem Dritten, insbesondere einem Betreiber (6) des Telefonnetzes (4), eine Bonität des Internetteilnehmers (1) geprüft und dem Empfänger (3) mitgeteilt wird.
